# EUROPEAN PATENT APPLICATION

(11) **EP 1 584 958 A1**
(43) Date of publication of application: **12.10.2005**
(21) Application number: 04025188.6
(22) Date of filing: 22.10.2004
(51) Int. Cl.: G02B 6/18, G02B 6/22, G02B 6/16, C03B 37/012

(54) **Photonic crystal fiber capable of single-mode transmission and preform thereof**

(30) Priority: 06.04.2004 KR 2004023356
(71) Applicant: SAMSUNG ELECTRONICS CO., LTD., Gyeonggi-do (KR)
(72) Inventor: Lee, Jae-Ho, Suwon-si Gyeonggi-do (KR); Oh, Sung-Koog, Suwon-si Gyeonggi-do (KR)
(74) Representative: Lang, Johannes

(57) **Abstract**

A photonic crystal fiber capable of single-mode transmission and a preform thereof are disclosed. The photonic crystal fiber includes a substrate and a plurality of refraction index-adjusting material layers, each having a different refraction index, wherein the refraction index distribution of the fiber is the same as an electric field power distribution of incident light to be transmitted through the fiber. The photonic crystal fiber can minimize pulse dispersion caused by light loss and refraction-index deviation due to the incident light passing through a zone away from an actual core.

## Description

### BACKGROUND OF THE INVENTION

### 1. Field of the Invention

The present invention relates to a photonic crystal fiber (PCF) and, more particularly, to a refraction index-adjusted photonic crystal fiber capable of performing a single-mode transmission, and a manufacturing method of the same.

### 2. Description of the Related Art

In general, optical fibers used for optical signal transmission are broadly classified into single-mode fibers and multi-mode fibers. Single-mode fibers use only one mode, thus can prevent a mode-coupling dispersion generated during the multi-mode transmission. Therefore, single-mode fibers are largely used for long-distance signal transmission.

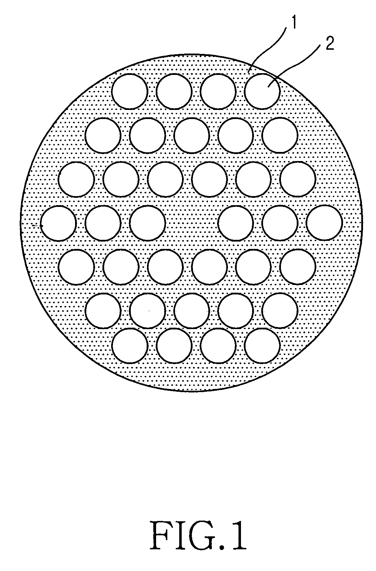

The single-mode fibers utilize glass, to which germanium or phosphorus is added, as a core, and transmit optical signals by using the difference in the refraction index of a core and a cladding. In contrast, as shown in FIG. 1, a photonic crystal fiber is formed by a substantially transparent material of a single solid phase, such as fused silica glass 1, in which air holes 2 are extended along the entire length of the fiber parallel to the fiber axis in a regular arrangement. Such fibers produce a photonic band-gap using the difference between the dielectric constant of an air layer and that of a silica glass layer. The photonic band-gap plays a role in protecting the light propagation toward a certain direction, like an electronic band-gap in semiconductors. In other words, only the lights satisfying the condition of the photonic band-gap can pass through the photonic band-gap.

The photonic crystal fibers have many technically-important characteristics. For example, such fibers can support a single-mode transmission over a broad range of wavelengths and can have a broad mode area. These characteristics enable the transmission at high optical power and produce a large phase dispersion at a remote communication wavelength of 1.55 µm. Moreover, they serve as an important device for increasing/reducing non-linearity and for controlling light polarization. Therefore, it is expected that photonic crystal fibers may be applied in a broad range of light communication industries and other light industries in the near future.

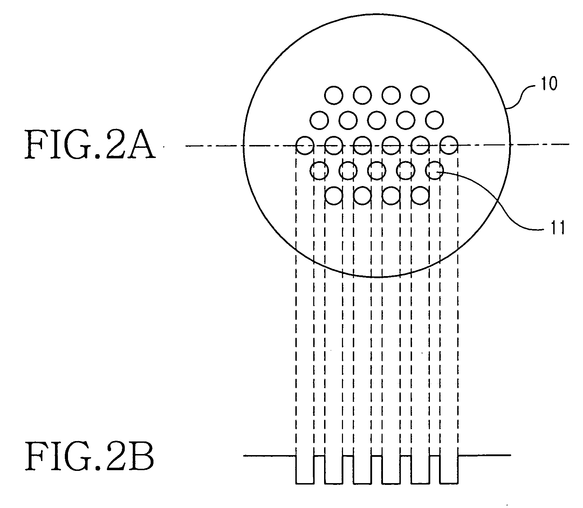

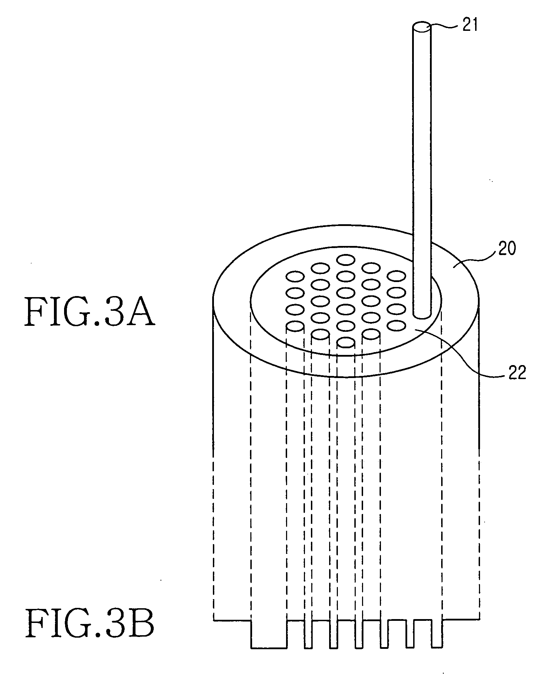

In order to draw photonic crystal fibers (PCF) with a sufficient length while maintaining their circular shape, it is necessary to manufacture photonic crystal fiber (PCF) preforms in a circular shape. Conventional photonic crystal fiber preforms (PCF) have a structure as shown in FIG. 2 and FIG. 3.

Referring to FIG. 2a, a photonic crystal fiber (PCF) preform has a structure in which a plurality of circular holes is perforated in a circular silica glass rod 10 in the configuration of a photonic lattice to form air layers 11. The refraction index distribution of the PCF perform is shown in FIG. 2b.

Referring to FIG. 3a, another photonic crystal fiber (PCF) preform may have a structure in which a plurality of silica glass tubes 21 having a diameter smaller than that of a circular silica glass tube 20 is arranged in the silica glass tube 20 in the configuration of a photonic lattice. The refraction index distribution of the PCF perform is shown in FIG. 3b. In this case, various light transmission characteristics can be obtained depending on the lattice structure formed in the arrangement of the silica glass tubes 21.

However, the conventional photonic crystal fiber (PCF) preforms as described above exhibit transmission characteristics by means of a lattice structure using air and pure silica, thus having a limitation in design. Moreover, air holes are present inside the preforms which may cause deformation when drawing fibers, thereby deviating from the originally-intended design.

In addition, the conventional photonic crystal fiber (PCF) preforms comprise core materials having limited physical properties; thus it is difficult to make delicate fiber designs in the fiber production processes. As a result, an undesirable polarization mode dispersion (PMD) may be generated due to the shape of asymmetric fiber cores. Furthermore, in the case of single-mode optical fibers, incident light can pass a zone deviated from a real core, thereby causing light loss and refraction index deviation. Therefore, there is an additional problem of pulse dispersion caused by the light loss and the refraction index deviation.

### SUMMARY OF THE INVENTION

Accordingly, the present invention has been made to solve the above-mentioned problems occurring in the prior art and provides additional advantages, by providing a photonic crystal fiber capable of performing a single-mode transmission over a long-distance, and a preform thereof.

One aspect of the present invention is to provide a photonic crystal fiber capable of a single-mode transmission and a preform thereof, in which the preform can be easily prepared and a desired fiber design can be conveniently realized.

Another aspect of the present invention is to provide a photonic crystal fiber having a plurality of longitudinal holes, wherein the refraction index distribution of the fiber is the same as an electric field power distribution of incident light to be transmitted through the fiber.

Preferably, the refraction index distribution of the photonic crystal fiber has a gaussian distribution, wherein the refraction index is highest at the central point of the fiber and gradually decreases toward the edges of the fiber.

One embodiment provides a photonic crystal fiber preform for preparing a photonic crystal fiber having a refraction index distribution, which is the same as an electric field power distribution of incident light. The preform includes: a rod-shaped substrate having a plurality of holes arranged in the configuration of a photonic lattice; and a plurality of refraction index-adjusting material layers, each having a different refraction index, which are disposed in the holes and arranged so that their refraction index distribution is the same as an electric field power distribution of incident light.

Preferably, each of the refraction index-adjusting material layers takes the form of a rod or a tube, and is inserted into the holes.

More preferably, the refraction indices of the refraction index-adjusting material layers gradually decrease from the center of the fiber preform toward the outside, and have a gaussian distribution.

### BRIEF DESCRIPTION OF THE DRAWINGS

The above features and advantages of the present invention will be more apparent from the following detailed description taken in conjunction with the accompanying drawings, in which:
FIG. 1 is a schematic sectional view of a conventional photonic crystal fiber;
FIGs. 2a and 2b are schematic views showing a section of a conventional photonic crystal fiber preform and a refraction index distribution thereof;
FIGs. 3a and 3b are schematic views showing a section of another conventional photonic crystal fiber preform and a refraction index distribution thereof;
FIG. 4a is a sectional view of a photonic crystal fiber preform according to an embodiment of the present invention;
FIG. 4b is a graph showing a refraction index distribution taken along line A-A' of the fiber preform as shown in FIG. 4a and the electric field power distribution of incident light;
FIG. 5 is a sectional view showing the structure of a photonic crystal fiber preform according to an embodiment of the present invention;
FIG. 6 is a detailed view of the part represented by a dotted line in FIG. 5;
FIG. 7 is a graph showing an electric field power distribution of incident light taken along the line B-B' in FIG. 6, in terms of relative amplitudes ranged from 0 to 1;
FIG. 8 is a sectional view showing the structure of a photonic crystal fiber preform according to another embodiment of the present invention; and,
FIG. 9 is a sectional view showing the structure of a photonic crystal fiber preform according to still another embodiment of the present invention.

### DETAILED DESCRIPTION

Hereinafter, embodiments of the present invention will be described with reference to the accompanying drawings. For the purposes of clarity and simplicity, a detailed description of known functions and configurations incorporated herein will be omitted as it may make the subject matter of the present invention unclear.

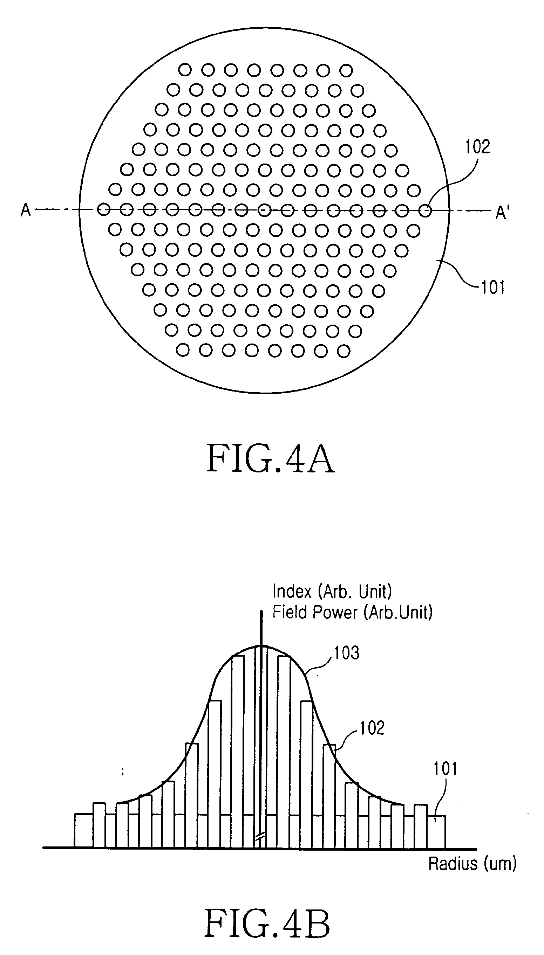

FIG. 4a is a sectional view of a photonic crystal fiber preform according to the present invention, and FIG. 4b is a graph showing a refraction index distribution taken along line A-A' of the fiber preform as shown in FIG. 4a and an electric field power distribution of incident light.

In order to facilitate an understanding of this invention, note that incident light to an optical fiber passes through a zone defined by a mode field diameter, and not by a core diameter. The mode field is defined as a zone ranged from a point at which the electric field power of incident light is the highest to a point at which the electric field power of incident light has decreased by 0.37x 1/e from the highest point. Also, the mode field has a gaussian distribution. Therefore, as shown in FIG. 4, when refraction index-adjusting materials 102 disposed in a substrate 101 of a fiber preform have a refraction index distribution that is the same as an electric field power distribution 103 of incident light, it is possible to minimize the pulse dispersion caused by light loss and refraction index deviation due to the incident light passing through a zone deviated from a real core.

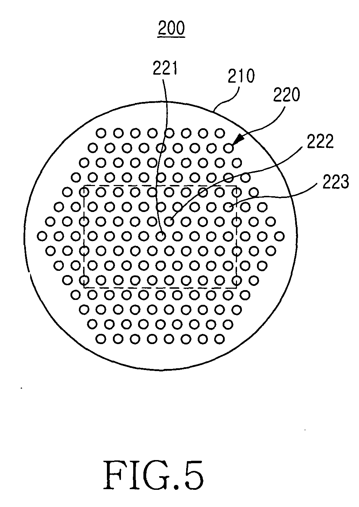

FIG. 5 is a sectional view showing the structure of a photonic crystal fiber preform 200 according to an embodiment of the present invention.

As shown in FIG. 5, the photonic crystal fiber preform 200 comprises a rod-shaped substrate 210 having a plurality of longitudinal holes 220 arranged in the configuration of a photonic lattice, and a plurality of refraction index-adjusting material layers 221, 222, 223, each having a different refraction index, which are disposed in the holes 220 and are arranged so that their refraction index distribution is the same as the electric field power distribution of incident light.

The holes 220 arranged in the configuration of a photonic lattice are disposed with spacing apart from each other by a certain distance and form a hexagonal pattern as a whole. Also, the holes 220 are filled with the layers 221, 222, 223, each having a different refraction index. The refraction index distribution of the photonic crystal fiber preform 200 is determined by the refraction indices of the refraction index-adjusting material layers 221, 222, 223. Therefore, the refraction index-adjusting material layers 221, 222, 223 are selectively selected so that the refraction index distribution of the photonic crystal fiber preform 200 is the same as the electric field power distribution of incident light, and are disposed in the holes 220. Particularly, the layer 221 having the highest refraction index is disposed in the central point and other layers having gradually-decreased refraction indices are disposed toward the edges.

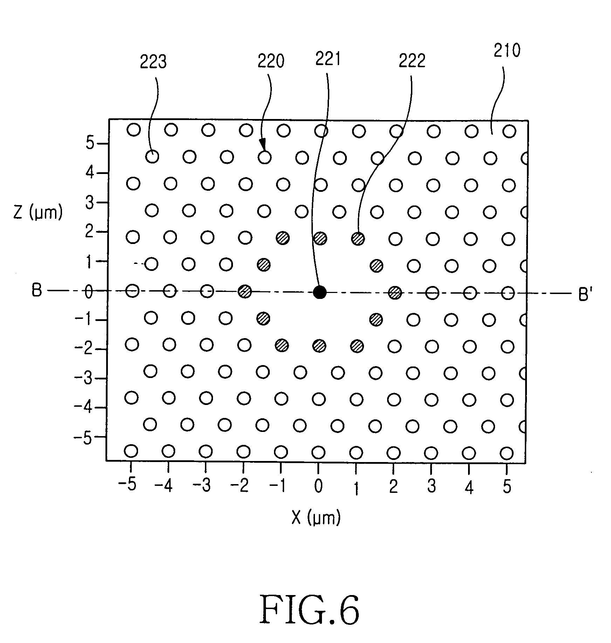

FIG. 6 is a detailed view represented by a dotted line in FIG. 5, wherein a rod-shaped substrate 210 comprises a material having a refraction index of 1, and for example, each of the holes is filled with a tube 221 having a refraction index of 5, a tube 222 having a refraction index of 3 and a tube 223 having a refraction index of 2, respectively. The substrate 210 may comprise a pure silica-containing material or a material containing silica mixed with a dopant having a predetermined refraction index, and each of the refraction index-adjusting material layers 221, 222, 223 may comprise a material having a different relative refraction index according to the refraction index of pure silica.

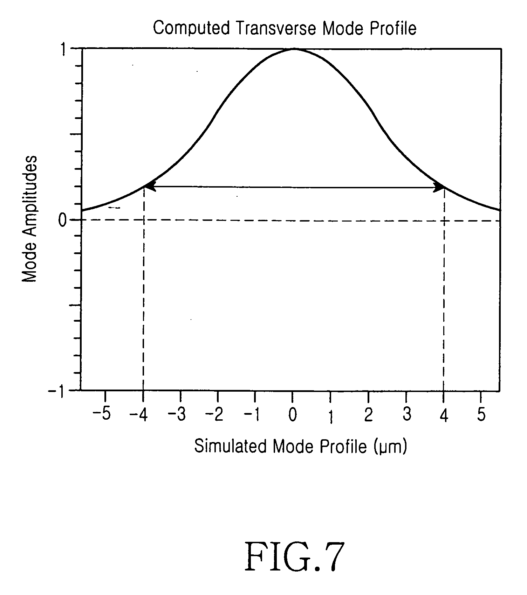

FIG. 7 is a graph showing an electric field power distribution of incident light taken along the line B-B' in FIG. 6, in terms of relative amplitudes ranged from 0 to 1. As can be seen from FIG. 7, since the refraction index-adjusting material layers are arranged so that their refraction indices gradually decrease from the center of the fiber preform to the edges, the refraction index of the fiber preform also decreases from the center of the fiber preform to the edges.

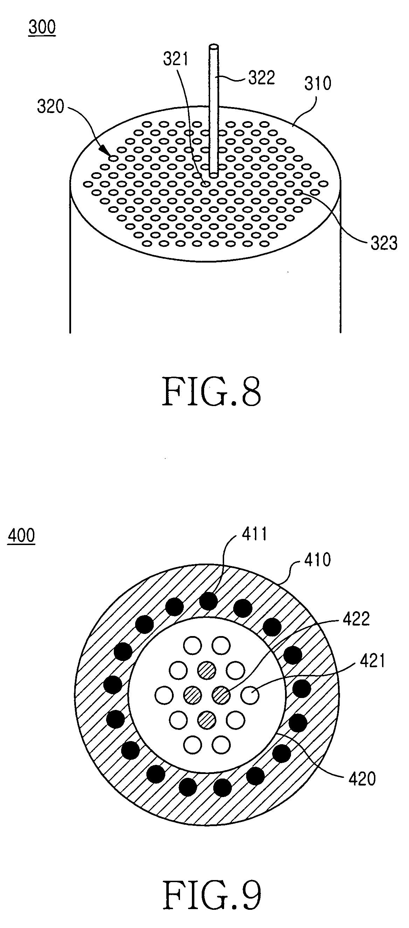

FIG. 8 is a sectional view showing the structure of a photonic crystal fiber preform according to another embodiment of the present invention.

As shown in FIG. 8, the photonic crystal fiber preform 300 comprises a rod-shaped substrate 310 having a plurality of longitudinal holes 320 arranged in the configuration of a photonic lattice, and a plurality of refraction index-adjusting tubes 321, 322, 323 formed to be inserted into the holes 320, each tube having a different refraction index. As described above with regard to FIG. 5, the refraction index distribution of the photonic crystal fiber preform 300 is determined by the refraction indices of the refraction index-adjusting tubes 321, 322, 323. Therefore, the refraction index-adjusting tubes 321, 322, 323 are selectively arranged so that the refraction index distribution of the photonic crystal fiber preform 300 is the same as an electric field power distribution of incident light. Particularly, the tube 321 having the highest refraction index is disposed in the central point and other tubes having gradually decreased refraction indices are disposed toward the edges.

FIG. 9 is sectional view showing the structure of a photonic crystal fiber preform according to yet another embodiment of the present invention.

As shown in FIG. 9, the photonic crystal fiber preform 400 comprises two substrates having a refraction index different from each other, for example a cylindrical outer substrate 410 formed by pure silica tube and a material having a certain relative refraction index, and an inner substrate 420 formed of a pure silica tube and disposed inside the outer substrate 410. Each of the outer substrate 410 and the inner substrate 420 has a plurality of longitudinal holes arranged in the configuration of a photonic lattice. A plurality of tubes 411, 421, 422, each having a different refraction index, is inserted into the holes. Alternatively, each of the holes may be filled with a material having a different refraction index. As described above, the refraction index distribution of the photonic crystal fiber preform 400 is determined by the refraction indexes of the tubes 411, 421, 422 formed in the outer substrate 410 and the inner substrate 420, and the refraction index of the material contained in the outer substrate 410. Therefore, the tubes 411, 421, 422 are selectively arranged so that the refraction index distribution of the photonic crystal fiber preform 400 is the same as an electric field power distribution of incident light.

Further, each of the photonic crystal fibers prepared from the photonic crystal fiber preforms according to the aforementioned embodiments of the present invention also has a structure and a refraction index distribution that are the same as those of the preforms. A process of preparing an optical fiber from an optical fiber preform through the steps of melting, drawing, etc., is known in the art, and thus a detailed description with regard to the process will be omitted.

As can be seen from the foregoing, according to the photonic crystal fibers of the present invention having a refraction index distribution that is the same as an electric field power distribution of incident light, it is possible to minimize the pulse dispersion caused by light loss and refraction index deviation due to the incident light passing through a zone away from an actual core. Therefore, the present invention can provide photonic crystal fibers capable of transmitting single-mode signals by a long distance and show extremely low light loss and light non-linearity. Further, optical fibers having a desired design can be easily realized by adjusting the refraction index distribution of a photonic crystal fiber preform through the arrangement of refraction index-adjusting material layers.

While the invention has been shown and described with reference to certain preferred embodiments thereof, it will be understood by those skilled in the art that various changes in form and details may be made therein without departing from the spirit and scope of the invention as defined by the appended claims.

## Claims

1. A photonic crystal fiber used for a single-mode transmission, comprising a plurality of longitudinal holes having a refraction index distribution which is the same as an electric field power distribution of incident light to be transmitted through the fiber.

2. The photonic crystal fiber as claimed in claim 1, wherein the refraction index distribution of the fiber has a gaussian distribution, in which the refraction index is the highest at the central point of the fiber and gradually decreases toward the edges.

3. A photonic crystal fiber preform used to produce a photonic crystal fiber having a refraction index distribution that is the same as an electric field power distribution of incident light, comprising:
a rod-shaped substrate having a plurality of holes arranged in the configuration of a photonic lattice; and,
a plurality of refraction index-adjusting material layers, each having a different refraction index, which are disposed in the holes and are arranged so that their refraction index distributions are the same as the electric field power distribution of incident light to be transmitted through the fiber.

4. The photonic crystal fiber preform as claimed in claim 3, wherein each of the refraction index-adjusting material layers is inserted into the holes in the form of a rod or a tube.

5. The photonic crystal fiber preform as claimed in claim 3, wherein the refraction indices of the refraction index-adjusting material layers gradually decrease from the central point of the preform toward the edges.

6. The photonic crystal fiber preform as claimed in claim 5, wherein the refraction indices of the refraction index-adjusting material layers have a gaussian distribution.

7. The photonic crystal fiber preform as claimed in claim 3, wherein the substrate comprises a pure silica-containing material.

8. The photonic crystal fiber preform as claimed in claim 3, wherein the substrate comprises silica mixed with a dopant having a predetermined refraction index.

9. The photonic crystal fiber preform as claimed in claim 7, wherein each of the refraction index-adjusting material layers has a different relative refraction index according to the refraction index of pure silica.

10. A photonic crystal fiber preform comprising:
a cylindrical substrate; and
a plurality of refraction index-adjusting material layers, each having a different refraction index, which are disposed in the cylindrical substrate in the configuration of a photonic lattice and are arranged so that their refraction index distribution is the same as an electric field power distribution of incident light to be transmitted through the fiber,
wherein the refraction index distribution of the photonic crystal fiber preform can be selectively adjusted by the arrangement of the refraction index-adjusting material layers.

11. The photonic crystal fiber preform as claimed in claim 10, wherein each of the refraction index-adjusting material layers takes the form of a rod or a tube having a radius smaller than that of the substrate.

12. The photonic crystal fiber preform as claimed in claim 10, wherein the refraction indices of the refraction index-adjusting material layers gradually decrease from the central point of the preform toward the edges.

13. The photonic crystal fiber preform as claimed in claim 12, wherein the refraction indices of the refraction index-adjusting material layers have a gaussian distribution.

14. A photonic crystal fiber preform comprising:
a cylindrical outer substrate having a plurality of first holes;
a rod-shaped inner substrate inserted into the outer substrate, which has a plurality of second holes arranged in the configuration of a photonic lattice together with the first holes; and,
a plurality of refraction index-adjusting material layers, each having a different refraction index, which are disposed in the first and the second holes and are arranged so that their refraction index distribution coincides with an electric field power distribution of incident light to be transmitted through the fiber,
wherein the refraction index distribution of the photonic crystal fiber preform can be selectively adjusted by the arrangement of the refraction index-adjusting material layers.

15. The photonic crystal fiber preform as claimed in claim 14, wherein each of the refraction index-adjusting material layers takes the form of a rod.

16. The photonic crystal fiber preform as claimed in claim 14, wherein each of the refraction index-adjusting material layers is inserted into the holes in the form of a tube.
